# EUROPÄISCHE PATENTANMELDUNG

(11) **EP 4 152 689 A1**
(43) Veröffentlichungstag der Anmeldung: **22.03.2023**
(21) Anmeldenummer: 21197157.7
(22) Anmeldetag: 16.09.2021
(51) Int. Cl.: H04L 9/40, G06F 9/455, H04L 61/2514

(54) **VERFAHREN, COMPUTERPROGRAMMPRODUKT UND VORRICHTUNG ZUR ERSTELLUNG EINES ZERTIFIKATES FÜR DIE SICHEREN BEREITSTELLUNG VON DIENSTEN**

(71) Anmelder: Siemens Aktiengesellschaft, 80333 München (DE)
(72) Erfinder: Albrecht, Harald, 90475 Nürnberg (DE); Balduf, Jochen, 76707 Hambrücken (DE); Volkmann, Frank, 90475 Nürnberg (DE)
(74) Vertreter: Siemens Patent Attorneys

(57) **Zusammenfassung**

Die Erfindung betrifft ein Verfahren, ein Computerprogrammprodukt sowie ein System zur Bereitstellung von Diensten, insbesondere in einem industriellen Automatisierungssystem.

Industrielle Automatisierungssysteme umfassen üblicherweise eine Vielzahl von miteinander vernetzten Automatisierungsgeräten und dienen im Rahmen einer Fertigungs- oder Prozessautomatisierung zur Steuerung oder Regelung von Anlagen, Maschinen bzw. Geräten. Steuerungsdienste bzw. -anwendungen können automatisiert und auslastungsabhängig auf aktuell verfügbare Server oder virtualisierten Umgebungen eines industriellen Automatisierungssystems verteilt werden.

Dabei ist es auch erforderlich, für eine sichere Kommunikation benötigte Zertifikate zu verteilen. Die Erfindung bietet die Möglichkeit, dieses mittels automatisierter Prozesse durchzuführen, ohne zusätzliche Eingriffe von Inbetriebsetzern oder Projektierern.

## Beschreibung

Verfahren, Computerprogrammprodukt und Vorrichtung zur Erstellung eines Zertifikates für die sicheren Bereitstellung von Diensten.

Die vorliegende Erfindung betrifft ein Verfahren, ein Computerprogrammprodukt sowie ein System zur Bereitstellung von Diensten, insbesondere in einem industriellen Automatisierungssystem.

Industrielle Automatisierungssysteme umfassen üblicherweise eine Vielzahl von über ein industrielles Kommunikationsnetz miteinander vernetzten Automatisierungsgeräte und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtualisierten Umgebungen eines industriellen Automatisierungssystems verteilt werden.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern.

In Ethernet-basierten Kommunikationsnetzen können Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann schließlich dazu führen, dass Datenströme oder Datenrahmen mit Echtzeitanforderungen nicht entsprechend einer angeforderten bzw. benötigten Dienstgüte übermittelt werden.

Mit der Edge Technologie können beispielsweise automatisierungstechnische Anwender selbst einfach und modular die von ihnen gewünschten Funktionalitäten für ihre Automatisierung in Form von Applikationen installieren, aktualisieren und erweitern. Einerseits profitieren Anwendern von zentralisierter und einfach skalierbarer Verwaltung auch vieler, im Folgenden auch Industrial Edge genannte Geräte, andererseits vom Markt, der ebenfalls Drittanbieter dieser Applikationen umfasst. Ein wesentlicher weiterer Aspekt, ist der Wunsch der Automatisierungsanwender, Applikationen unterschiedlicher Anbieter möglichst ohne zusätzlichen Integrationsaufwand einfach installieren und sofort in Betrieb nehmen zu können.

Für einen semantisch hochwertigen und sicheren Datenaustausch hat sich in der Automatisierungstechnik OPC UA (OPC Unified Architecture, www.opcfoundation.org) etabliert. Applikations-Anbieter steigern die Attraktivität ihrer Applikationen, indem sie beispielsweise die von diesen berechneten Daten aus einer Produktionsdatenanalyse, Bildanalyse und dergleichen mehr, über einen integrierten OPC UA Server anderen Automatisierungsfunktionen bereitstellen. Gegenüber der klassischen Gerätewelt sind nun aber in das gleiche (Industrial Edge) Gerät nicht nur ein klassischer Geräte-OPC-Server zu integrieren, sondern mehrere Applikationen mit OPC UA Server Funktionalität von verschiedener (Dritt-) Anbieter.

Ablaufsteuerungskomponenten sind insbesondere Software-Container, die jeweils von anderen Software-Containern oder Container-Gruppen isoliert innerhalb der Ablaufsteuerungsumgebung auf einem Host-Betriebssystem einer Server-Einrichtung ablaufen. Grundsätzlich können für die Ablaufsteuerungskomponenten auch alternative Micro-Virtualisierungskonzepte, wie Snaps, verwendet werden.

Die Ablaufsteuerungsumgebung kann beispielsweise eine Docker Engine oder einen Snap Core umfassen, die auf einer Server-Einrichtung abläuft. Vorteilhafterweise nutzen die Software-Container jeweils gemeinsam mit anderen auf der jeweiligen Server-Einrichtung ablaufenden Software-Containern einen Kernel des Host-Betriebssystems der Server-Einrichtung. Speicherabbilder für die Software-Container können beispielsweise aus einem durch eine Vielzahl von Nutzern lesend bzw. schreibend zugreifbaren Speicher- und Bereitstellungssystem abgerufen werden.

Auch Anwender von solchen, mittels Containervirtualisierung oder vergleichbaren Virtualisierungskonzepten realisierten, Steuerungsanwendungen für industrielle Automatisierungssysteme erwarten eine möglichst unkomplizierte Integration derartiger Anwendungen in ihre bestehende Infrastruktur.

Wird eine OPC UA Server-Applikation in einer Virtualisierungslösung wie beispielsweise einem (Docker) Container ausgeführt, dann ist die Applikation zunächst einmal frei in den von ihr belegten Netzwerkressourcen wie insbesondere TCP-Ports - hier ist insbesondere bei OPC UA der Port 4840 für einen einzelnen Server vordefiniert.

Eine manuelle Integration, wie in der bisherigen Einzelgerätewelt, ist im industriellen Umfeld zu aufwändig und fehlerträchtig, und teilweise aufgrund mangelnder Konfigurationspunkte in den OPC UA Servern sogar unmöglich. Diese Integration umfasst nicht nur die Applikationen im Gerät, sondern auch das Zusammenspiel Geräte-externer Anteile der Automatisierungs-Applikationen mit den Geräte-Applikationen.

Je nach Netzwerkanbindung und verwendeter Ablaufsteuerungsumgebung treffen insbesondere OPC UA Server auf höchst unterschiedliche anwenderseitige Konfigurationen, die durch Entwickler von Steuerungsanwendungen bei automatisierten Konfigurationsverfahren für die Steuerungsanwendungen berücksichtigt werden müssen. Bei der Netzwerkanbindung stellen anwenderseitig knappe IP-Adress- und TCP-Portnummernbereiche besondere Herausforderungen im Rahmen der Integration von Steuerungsanwendungen in eine bestehende Infrastruktur dar.

Die OPC UA Server-Applikationen sind jedoch ohne weitere Maßnahmen nicht von außen erreichbar, so dass der Anwender die Server-Ports zwischen der Applikations-Sicht und der Edge-Geräte-Sicht rangieren muss und dabei auf Port-Konflikte und das Einhalten möglicher Einschränkungen der Netzwerkumgebung achten muss - wie beispielsweise die begrenzte Menge der in Firewalls freischaltbaren Ports und deren konkrete Wertebereiche bzw. voreingestellte Standardregeln ohne weiteren (Konfigurations-) Aufwand verwenden kann.

Außerdem muss der automatisierungstechnische Anwender die anderen Anteile seiner Automatisierungsapplikation mit den Servern über die konkreten Netzwerkadressierungsinformationen verknüpfen.

### Stand der Technik

Anwender und Entwickler von Server-Applikationen im Ökosystem der Industrial Edge wünschen eine über die reine Konnektivität zwischen Clients und Servern hinausgehende abgesicherte Kommunikation, beispielsweise gemäß OPC UA-Standard. Die abgesicherte Kommunikation soll dabei möglichst einfach und vor allem möglichst ohne zusätzlichen Aufwand und Expertenwissen bei Einrichtung und Betrieb möglich sein. Zudem müssen mehr als nur ein einzelner UA-Server unterstützt werden können. Die Teilnehmer am Ökosystem der Industrial Edge wünschen deshalb weitgehend automatische Integrationsmechanismen, möglichst ohne Eingriffe in heute gängige OPC UA-Software-Stacks.

Für die im Folgenden beschriebene Verfahren ist es Voraussetzung, dass (OPC UA-)Server auf einem Industrial Edge/Container System, beispielsweise über einen intelligenten Proxy, für Clients auffindbar und erreichbar sind. Mögliche Lösungen für diese Aufgabe hat die Anmelderin in einer weiteren (nachveröffentlichten) Patentanmeldung beschrieben.

Ohne weitere Maßnahmen wird der Verbindungsaufbau über den Proxy mit einem inneren Server, vom OPC UA Client bei der Prüfung des Server-Zertifikats abgebrochen, da die im Zertifikat eingetragenen innerhalb des Teilnetzes gültigen Adressierungsinformationen, auch "inneren" oder internen Endpunkt-Adresse(n) (EndpointURIs, Uniform Resource Identifier) genannt, des Servers nicht mit den für die Clients sichtbaren (und durch den Proxy erstellten "äußeren" oder externen) EndpointURIs übereinstimmen.

Die Manipulation der Endpunkt-Adressen (EndpointURIs) der OPC UA Server-Apps/Instanzen durch den Proxy ist jedoch grundsätzlich erforderlich.

Die Generierung/Verwendung von Zertifikaten mit ungültigen Netzwerkparametern (Hostname/IP und Port) durch den Server ist eine systembedingte Eigenschaft gängiger Virtualisierungslösungen (wie Containern), da nur diese dem OPC UA Server bekannt sind.

Bei der Ablehnung des Serverzertifikats durch den Client, handelt es sich um eine grundlegende Eigenschaft gängiger Virtualisierungslösungen (wie Containern), da einem darin ausgeführten (OPC UA) Server immer stets nur seine inneren Netzwerkparameter (Hostname/IP und Port) des virtuellen Netzwerkes bekannt sind, aber diese nicht mit den Netzwerkparametern des für den Client erreichbaren Host-Systems übereinstimmen.

Bislang führt dies zu der Schwierigkeit, dass einerseits die Entwickler von (OPC UA) Server-Applikationen geeignete zusätzliche Konfigurationsmechanismen vorsehen müssen und andererseits industrielle Anwender bei Inbetriebsetzung von Industrial Edge-Geräten und deren (OPC UA) Server-Applikationen die erforderlichen und für den Verbindungsaufbau geeigneten Server-Zertifikate manuell erstellen und in die einzelnen (OPC UA) Server-Applikationen installieren müssen.

Anwender und Applikations-Entwickler wünschen sich deshalb das automatisierte Abwickeln der Schritte, um möglichst rasch und ohne Aufwand ein sicher laufendes System zu bekommen. Durch die OPC UA-Standards sind solche Lösungen derzeit nicht erfasst.

Applikations-Entwickler wünschen sich darüber hinaus, dass sie möglichst wenig oder idealerweise keinerlei spezielle

Vorkehrungen für ihre Industrial-Edge Container berücksichtigen müssen, also eine out-of-the-box-Lösung.

Damit der Server ein gültiges Zertifikat erhält muss der Anwender heute:
zunächst manuell ein Zertifikat mit den konkreten Endpunkt-Informationen (EndpointURIs) des Hostsystems erstellen. Diese sind erst im laufenden Betrieb sicher bekannt.

In einem zweiten Schritt muss er das Zertifikat auf den (OPC UA) Server laden, wobei dieses Laden abhängig vom jeweiligen (OPC UA) Server und dessen Lade-Mechanismus ist. Ein automatisierter Prozess kann hierfür nicht eingesetzt werden, da bei dem zugrundliegenden "Certificate Signing Request" (CSR) des OPC UA Servers gegenüber einem Zertifikatsserver ebenfalls nur die inneren Netzwerkparameter verwendet werden.

Der vorliegenden Erfindung liegt daher die Aufgabe zugrunde, eine sichere Bereitstellung von Diensten zu bieten, wobei eine automatisierte Erstellung und Einrichtung ermöglicht wird.

Diese Aufgabe wird erfindungsgemäß durch ein Verfahren mit den in Anspruch 1 angegebenen Merkmalen, einem Computerprogrammprodukt mit den im Anspruch 5 angegebenen Merkmalen und durch eine Vorrichtung mit den im Anspruch 6 angegebenen Merkmalen gelöst.

Das erfindungsgemäße Verfahren wird zur Erstellung eines Zertifikates für die sichere Bereitstellung von Diensten mittels Ablaufsteuerungskomponenten in einer Ablaufsteuerungsumgebung an einen Dienstabnehmer verwendet.

Einem Dienst ist jeweils zumindest eine Server-Komponente zugeordnet, die durch eine in die Ablaufsteuerungsumgebung ladbare und dort ausführbare Ablaufsteuerungskomponente gebildet wird.

Eine Proxy-Komponente eines die Ablaufsteuerungsumgebung umfassenden Teilnetzes nimmt Anfragen von einem Dienstabnehmer an.

Eine zentrale Verzeichnisdienst-Komponente verwaltet die innerhalb des Teilnetzes gültigen Adressierungsinformationen einer internen Endpunkt-Adresse der Server-Komponente und zugehörigen äußeren Endpunkt-Adresse, an die Proxy-Komponente übermittelt und bei der eine Registrierung der Server-Komponente mit seinen internen Endpunkt-Adresse (endpointURI) erfolgt.

Ein interner Verzeichnisdienst erhält der die erforderlichen Informationen über äußere und zugehörige interne Endpunkt-Adresse vom lokalen Verzeichnisdienst und erstellt das für eine spätere Verschlüsselung der Kommunikation benötigte Zertifikat mit der ermittelten zugehörigen äußeren Endpunkt-Adresse und pusht es an die Server-Komponente, damit ein Dienstabnehmer unter Verwendung des Zertifikats eine verschlüsselte Verbindung zu der Server-Komponente aufbauen kann.

Vorteilhafte Weiterbildungen der Erfindung sind in den abhängigen Ansprüchen wiedergegeben.

Die bevorzugte beschriebene Ausführungsform bezieht sich auf Server und Clients, welche mittels des Protokolls OPC-UA miteinander kommunizieren. Es handelt sich jedoch nur um eine mögliche Ausgestaltungsform, andere Ausgestaltungen, insbesondere unter Verwendung des HTTPS Protokolls sind ebenfalls denkbar. Entsprechend ist der Server dann ein https-Server und der Client ein https-Client, die generellen Mechanismen bleiben aber die gleichen.

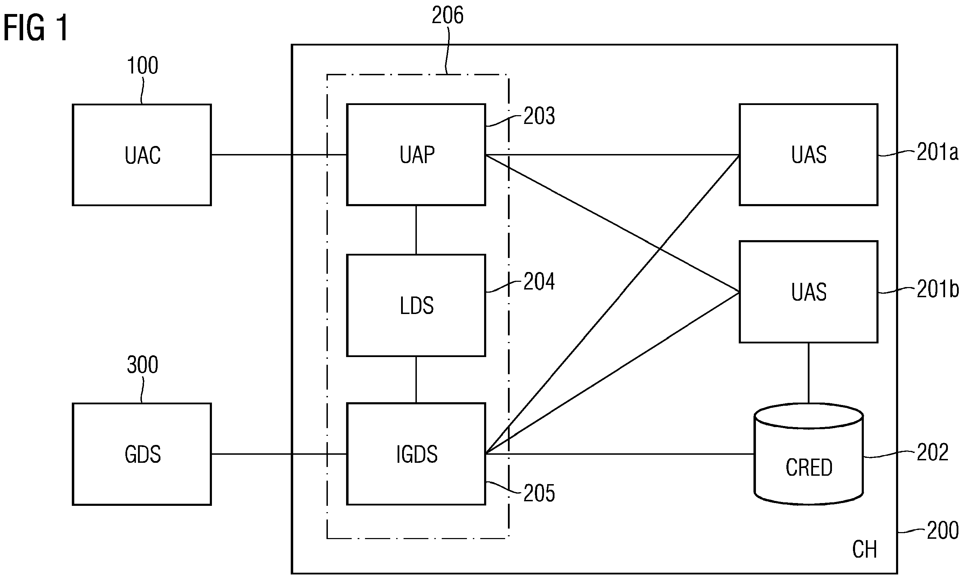

Die hier vorgeschlagene Lösung wird in den Figuren genauer dargestellt, dabei zeigt
Figur 1 den Aufbau des Systems am Beispiel einer Industrial Edge mit einzelnen Komponenten, und
Figur 2 einen beispielhaften Ablauf des erfindungsgemäßen Verfahrens in dem in Figur 1 dargestellten Systems.

Die Figuren zeigen eine Proxy-Komponente UAP, 203 mit Local Discovery Server Funktionalität LDS, 204. (OPC UA) Clients UAC, 100 können die auf einem einzelnen Netzwerkgerät - wie beispielsweise einer Industrial Edge / Container Host CH, 200 - installierte Vielzahl von (OPC UA) Servern UAS, 201a, 201b mittels des Local Discovery Server LDS, 204 auffinden.

Die OPC UA Server UAS, 201a, 201b sind über die Proxy-Komponente UAP, 203 und vorzugsweise über nur einen Port, wie dem well-known Port 4840, ansprechbar, was die Sicherheits-Aspekte der Netzwerktopologie aus administrativer Sicht verbessert. Die administrative Sicht der Netzwerkressourcen über die Proxy-Komponente UAP, 203 ist von der internen Server- bzw. Container-Sicht entkoppelt.

Die Proxy-Komponente UAP, 203 und die Verzeichnisdienst-Komponente, Local Discovery Server LDS, 204 können dabei als eine funktionale Einheit oder als getrennte funktionale Einheiten (Prozesse, Programme, usw.) ausgestaltet sein. Dies ist in der Figur durch den gestrichelten Kasten 206 angedeutet.

Die vom Verzeichnisdienst, Local Discovery Server LDS bereitgestellten Informationen ermöglichen es erst der Proxy-Komponente UAP, 203 Verbindungsanforderungen von OPC UA Clients UAC, 100 korrekt weiterzuleiten und bestimmte, noch unverschlüsselten Teile (in der Regel der Beginn) der Kommunikation zur Diensteanforderung entweder eigenständig auf Basis der bereitgestellten Information zu beantworten oder alternativ die zugehörigen Diensteantworten (ACK) korrekt umzuschreiben.

Die beschriebene Struktur 206, bestehend aus einem OPC UA-Proxy UAP, 203 und dem Verzeichnisdienst, Local Discovery Service LDS, 204 wird erfindungsgemäß um einen neuartigen internen Verzeichnisdienst, Internal Global Discovery Service IGDS, 205 ergänzt. Dieser internen Verzeichnisdienst, IGDS ist nur für die auf einem (Container) Host / Industrial Edge Gerät, CH, 200 laufenden OPC UA-Server UAS, 201a, 201b, sowie für den Verzeichnisdienst Local Discovery Server LDS 204 sichtbar.

Der internen Verzeichnisdienst, Internal Global Discovery Service IGDS, 205 konfiguriert hierbei die im Container Host UAC verfügbaren OPC UA Dienste bzw. Applikationen mit korrekten Zertifikaten. Korrekt bedeutet in diesem Kontext, dass die vom OPC UA Server verwendeten Zertifikate nicht mehr auf die internen EndpointURIs, sondern auf die extern für die OPC UA Clients UAC, 100 auffindbaren und zu benutzenden Endpoint URIs ausgestellt sind.

Die externen Endpoint URIs werden hierbei beispielsweise über eine (entsprechend Standard noch, zumindest teilweise, ungesicherte) Kommunikationsverbindung über den Verzeichnisdienst, Local Discovery Service LDS, 204 erkundet. Danach kann ein UAC (100) eine Kommunikationsverbindung zu einem der UAS (201a, 201b, ...) nicht nur grundsätzlich aufbauen, sondern auch erfolgreich sichern, da das vom UAS präsentierte Zertifikat nun korrekt auf den vom Client verwendete externen EndpointURI ausgestellt ist.

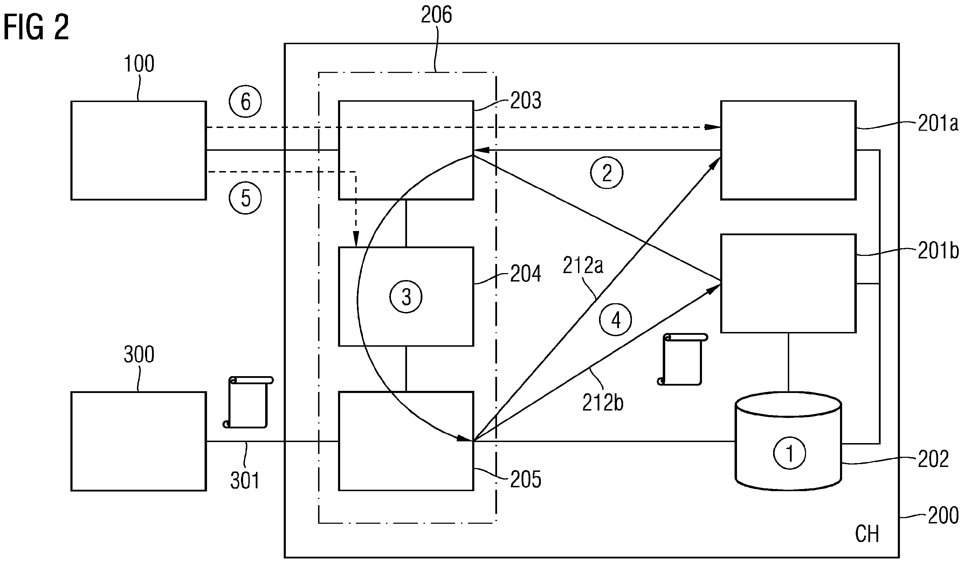

Der Ablauf einer Inbetriebsetzung einer neuen Applikation ist in Figur 2 dargestellt, mit folgenden Schritten;
1. Ein Credential wird in einem zentralen Speicherort CRED hinterlegt. Credentials sind aus dem Security Umfeld bekannt. Die Credentials sind innerhalb des Container Host beim interner Verzeichnisdienst IGDS, 205 und bei den Dienstanbietern 201a, 201b bekannt. Diese können bereits vorher generiert und hinterlegt worden sein, beispielsweise bei der Projektierung.
2. Eine Registrierung beispielsweise einer (neuen) Applikation auf einem OPC-UA Server UAS, 201a, 201b erfolgt.
3. Aufgrund der Registrierung werden für die spätere Verschlüsselung benötigten Zertifikate vom internen Verzeichnisdienst IGDS, 205 erzeugt (und beispielsweise in einer sogenannten Mapping Table im Lokalen Verzeichnisdienst LDS, 204 hinterlegt).
4. Die Zertifikate werden an den OPC-UA Server mit der Applikation gepusht, 212a, 212b.
5. Ein Dienstabnehmer 100 baut eine Verbindung zu dem Container Host CH auf, um auf eine Applikation UAS, 201a, 201b zuzugreifen. Die Anfrage wird an den Lokalen Verzeichnisdienst 204 von der Proxy-Komponente 203 durchgereicht.
6. Der Diensteabnehmer bekommt die benötigten Informationenen und kann danach die Verbindung mit dem Dienstanbieter 201a, 201b aufnehmen, über die Proxy-Komponente 203, mit dem richtigen Zertifikat und der korrekten EndpointURIs.

Der Diensteabnehmer 100 bekommt vom Routing nichts mit. Der Verzeichnisdienst, Proxy-Komponente 203 bekommt vom Lokalen Verzeichnisdienst LDS 204 die internen Verbindungsinformationen und leitet die Anfrage des Diensteabnehmer 100 an diesen Server (UAS) weiter.

Der Server übermittelt dem Client sein Zertifikat, dass er zuvor vom (I)GDS bekommen hat und dass nun die externen EndpointURIs enthält.

Der interne Verzeichnisdienst IGDS, 205 erhält die für seine korrekte Funktion erforderlichen Informationen über sowohl die äußeren als auch internen EndpointURIs vom Lokalen Verzeichnisdienst LDS, 204. Der Lokalen Verzeichnisdienst LDS, 204 verfügt über diese Informationen, weil sich die OPC UA Server, Dienstanbieter UAS, 201a, 201b, bei ihm mit ihren internen EndpointURIs registrieren und der Lokalen Verzeichnisdienst LDS zudem mit der Proxy-Komponente UAP, 203 bezüglich der externen EndpointURIs synchronisiert ist.

Der interne Verzeichnisdienst IGDS, 205 kann für jeden OPC UA Server, Dienstanbieter UAS 201a, 201b, von einem externen Verzeichnisdienst Global Discovery Service GDS, 300 gemäß OPC UA-Standard, ein geeignet signiertes Zertifikat 301 anfordern. Dazu übermittelt der interne Verzeichnisdienst IGDS dem externen Verzeichnisdienst Global Discovery Service GDS die zu zertifizierenden Informationen insbesondere mit dem korrekten externen Endpoint URIs, die der externe Verzeichnisdienst Global Discovery Service GDS anschließend signiert und dann dem interne Verzeichnisdienst IGDS 205 zurück übermittelt. Der interne Verzeichnisdienst IGDS 205 übermittelt anschließend (212a, 212b, ...) diese, nun extern vom OPC UA Client, Dienstabnehmer UAC, 100 überprüfbaren und gültigen Zertifikate an den jeweiligen OPC UA Server, Dienstanbieter UAS 201a, 201b.

Dieser (Container Host, CH) interne Zertifikataustausch wird über ein einzelnes nur intern benutztes Credential (213) gemäß OPC UA-Standard abgesichert und darüber das Vertrauen zwischen den UAS und dem IGDS hergestellt.

Unter einem "Credential" versteht der Fachmann einen Berechtigungsnachweis, konkret ein Instrumentarium, das einem System die Identität eines anderen Systems oder eines Benutzers bestätigen soll.

Gegenüber einer heutigen manuellen Konfiguration ist jedoch nur ein einzelnes Geräte-internes Credential erforderlich, welches zudem nicht den Anforderungen für das Vertrauensverhältnis zwischen dem internen Verzeichnisdienst, internal Global Discovery Service IGDS 205 und einem Kunden- Verzeichnisdienst GDS 300 unterliegt. Insbesondere kann das Credential beispielsweise als "authentication token" oder auch ein Security-Token, also beispielsweise eine Hardwarekomponente zur Identifizierung und Authentifizierung von Benutzern. Eine andere Möglichkeit ist die Ausführung mittels "user/password" Eingabe, was ggf. auch rein lokal generiert und hantiert werden kann.

Weiterhin entkoppelt gegenüber der heute im OPC UA-Standard beschriebenen Systemkonfiguration ist ein lokaler/interner Verzeichnisdienst IGDS, 205, der die einzelnen OPC UA Server, Dienstanbieter UAS 201a, 201b vom Verzeichnisdienst GDS, 300 beispielsweise in einer Kundeninfrastruktur propagieren kann.

Ein neuartiger, in einem (Container) Host integrierten, 200 internen Verzeichnisdienst, internal Global Discovery Service IGDS 205 fungiert als Zwischeninstanz zwischen dem vorbekannten Verzeichnisdienst GDS, 300, beispielsweise einer Kunden-Infrastruktur, und den OPC UA-Server-Applikationen.

Der interner Verzeichnisdienst IGDS, 205 verfügt über die erforderlichen beiden Sichten auf sowohl die externen als auch internen Endpunkt-Adressen (EndpointURIs) und damit auch die verfügbaren Host-internen OPC UA-Server UAS 201a, 201b und den darauf zur Verfügung gestellten Applikationen. Nur er kann die für die erfolgreiche abgesicherte Kommunikation zwischen den externen UA-Clients UAC, 100 und den internen UA-Servern UAS 201a, 201b erforderlichen Zertifikate korrekt ausfüllen und extern signieren lassen.

Der externe Verzeichnisdienst GDS, 300 kann erst durch den internen Verzeichnisdienst IGDS, 205 die für den externen Zugriff über einen OPC UA Client UAC, 100 erforderlichen Zertifikate -ggf. durch Involvierung einer weiteren Registration Authority RA und/oder Certification Authority CA korrekt erstellen, signieren und letztlich per IGDS auf die OPC UA Server Instanzen laden.

Eine Registrierungsstelle (engl.: registration authority, kurz RA) ist eine Instanz innerhalb einer Sicherheitsinfrastruktur (PKI) und dient als Registrierungsbehörde für digitale Zertifikate.

Die Registrierungsstelle arbeitet eng mit der Zertifizierungsstelle (engl.: certification authority, kurz CA) zusammen und ist zuständig für das sichere Identifizieren und Registrieren des Zertifikatnehmers.

Durch die sogenannte "Chain-of-Trust" ist somit sogleich ein Vertrauensverhältnis mit diesen OPC UA Server Instanzen korrekt hergestellt.

Durch das vorgeschlagene Verfahren und die vorgeschlagene Vorrichtung wird eine Inbetriebsetzung der gesicherten Kommunikation mit OPC UA-Server-Applikationen für die potenziellen Nutzer sehr vereinfacht. Hier muss nicht jede Instanz manuell und einzeln eingebunden werden, die geschieht automatisch unter Berücksichtigung aller sicherheitsrelevanter Anforderungen.

Durch die verbesserte Sicherheit und verbesserte Inbetriebsetzung von Sicherheitselementen der Edge-Geräte und deren Applikationen (insbesondere unter Vermeidung von Hürden und Fallen für den Inbetriebsetzer) wird eine Steigerung der Attraktivität des (Industrial) Edge Ökosystems erreicht.

Mit dem vorgeschlagenen Verfahren werden die auf einem Edge/Container System laufenden OPC UA Server Instanzen automatisiert mit jeweils gültigen Zertifikaten befüllt.

Ein weiterer Vorteil der Erfindung entsteht durch das entkoppelte Vertrauensverhältnisse zwischen Kundeninfrastruktur und interner Edge-Infrastruktur: die UA-Server-Applikationen haben kein Wissen über Zertifikate und / oder Credentials der sensitiven Kunden-Infrastruktur, insbesondere des Kunden-Verzeichnisdienst GDS, der die Zertifizierungen ausführt. Die ermöglicht auch das Anbieten von Applikationen Dritter.

## Patentansprüche

1. Verfahren zur Erstellung eines Zertifikates für die sichere Bereitstellung von Diensten mittels Ablaufsteuerungskomponenten in einer Ablaufsteuerungsumgebung an einen Dienstabnehmer (UAC, 100), wobei
- dem Dienst jeweils zumindest eine Server-Komponente (UAS, 201a, 201b) zugeordnet ist, die durch eine in die Ablaufsteuerungsumgebung ladbare und dort ausführbare Ablaufsteuerungskomponente gebildet wird,
- zumindest eine Proxy-Komponente (UAP, 203) eines die Ablaufsteuerungsumgebung umfassenden Teilnetzes, Anfragen von einem Dienstabnehmer (UAC, 100) annimmt,
- eine zentrale Verzeichnisdienst-Komponente (LDS, 204) die innerhalb des Teilnetzes gültigen Adressierungsinformationen einer internen Endpunkt-Adresse der Server-Komponente (UAS, 201a, 201b) und zugehörigen äußeren Endpunkt-Adresse verwaltet, an die Proxy-Komponente (UAP, 203) übermittelt und bei der eine Registrierung der Server-Komponente (UAS, 201a, 201b) mit seinen internen Endpunkt-Adresse erfolgt,
- ein interner Verzeichnisdienst (IGDS, 205) der die erforderlichen Informationen über äußere und zugehörige interne Endpunkt-Adresse vom Lokalen Verzeichnisdienst (LDS, 204) erhält,
und das für eine spätere Verschlüsselung der Kommunikation benötigte Zertifikat mit der ermittelten zugehörigen äußeren Endpunkt-Adresse erzeugt und an die Server-Komponente (212a, 212b) überträgt, damit ein Dienstabnehmer (100) unter Verwendung des Zertifikats eine verschlüsselte Verbindung zu der Server-Komponente (UAS, 201a, 201b) aufbauen kann.

2. Verfahren zur Erstellung eines Zertifikates für die sichere Bereitstellung von Diensten mittels einer Ablaufsteuerungsumgebung, gemäß Patentanspruch 1, **dadurch gekennzeichnet, dass**
der interne Verzeichnisdienst (IGDS, 205) und/oder der lokale Verzeichnisdienst (LDS, 204) mit der Proxy-Komponente (UAP, 203) bezüglich der externen Endpunkt-Adresse synchronisiert sind.

3. Verfahren zur Erstellung eines Zertifikates für die sichere Bereitstellung von Diensten mittels einer Ablaufsteuerungsumgebung, gemäß einem der vorherigen Patentansprüche, **dadurch gekennzeichnet, dass**
Dienstabnehmer (UAC, 100) und Dienstanbieter (UAS 201a, 201b) unter Verwendung der Regelungen gemäß des OPC-UA Protokolls miteinander kommunizieren.

4. Verfahren zur Erstellung eines Zertifikates für die sichere Bereitstellung von Diensten mittels einer Ablaufsteuerungsumgebung, gemäß einem der vorherigen Patentansprüche 1 oder 2, **dadurch gekennzeichnet, dass**
Dienstabnehmer UAC und Dienstanbieter UAS unter Verwendung der Regelungen gemäß des HTTPS Protokolls miteinander kommunizieren.

5. Computerprogrammprodukt zur Bereitstellung von Diensten mittels einer Ablaufsteuerungsumgebung, gemäß den Verfahrensschritten eines der vorherigen Patentansprüche.

6. Vorrichtung (IGDS) zur Erstellung eines Zertifikates für die sichere Bereitstellung von Diensten mittels Ablaufsteuerungskomponenten in einer Ablaufsteuerungsumgebung, mit
- jeweils mindestens eine einem Dienst zugeordnete Server-Komponente (UAS, 201a, 201b), die durch eine in die Ablaufsteuerungsumgebung ladbare und dort ausführbare Ablaufsteuerungskomponente gebildet wird,
- zumindest eine Proxy-Komponente (UAP, 203) eines die Ablaufsteuerungsumgebung umfassenden Teilnetzes, zur Annahme von Anfragen von einem Dienstabnehmer (UAC, 100), und zur Weiterleitung von Dienstzugriffsanfragen entsprechend den Adressierungsinformationen an die Server-Komponenten Dienstzugriffsanfragen entsprechend den modifizierten Adressierungsinformationen an die Server-Komponenten
- eine zentrale Verzeichnisdienst-Komponente (LDS, 204) zur Verwaltung der innerhalb des Teilnetzes gültigen Adressierungsinformationen einer internen Endpunkt-Adresse der Server-Komponente (UAS, 201a, 201b) einer zugehörigen äußeren Endpunkt-Adresse, und zur Übermittlung an die Proxy-Komponente (UAP, 203) und zur Entgegennahme einer Registrierung der Server-Komponente (UAS, 201a, 201b) mit seiner zugehörigen internen Endpunkt-Adresse,
**gekennzeichnet durch**
- einen interner Verzeichnisdienst (IGDS, 205) zum Empfang und Verwaltung erforderlichen Informationen über äußere und zugehörige interne Endpunkt-Adresse vom Lokalen Verzeichnisdienst (LDS, 204),
und zur Erzeugung und Weiterverteilung eines Zertifikates (212a, 212b) für eine spätere Verschlüsselung der Kommunikation mit der ermittelten zugehörigen äußeren Endpunkt-Adresse und an die Server-Komponente(UAS, 201a, 201b), damit ein Dienstabnehmer (UAC, 100) unter Verwendung des Zertifikats eine verschlüsselte Verbindung zu der Server-Komponente (UAS, 201a, 201b) aufbauen kann.

7. Vorrichtung zur Erstellung eines Zertifikates für die sichere Bereitstellung von Diensten mittels einer Ablaufsteuerungsumgebung, gemäß Patentanspruch 6, **dadurch gekennzeichnet, dass**
die Proxy-Komponente (UAP, 203), die Verzeichnisdienst-Komponente, (LDS, 204) und der interne Verzeichnisdienst (IGDS, 205) als eine funktionale Einheit ausgestaltet sind.

8. Vorrichtung zur Erstellung eines Zertifikates für die sichere Bereitstellung von Diensten mittels einer Ablaufsteuerungsumgebung, gemäß Patentanspruch 6, **dadurch gekennzeichnet, dass**
die Proxy-Komponente (UAP, 203), die Verzeichnisdienst-Komponente, (LDS, 204) und der interne Verzeichnisdienst (IGDS, 205) als funktional getrennte Einheiten ausgestaltet sind.

9. Vorrichtung zur Erstellung eines Zertifikates für die sichere Bereitstellung von Diensten mittels einer Ablaufsteuerungsumgebung, gemäß einem der vorherigen Patentansprüche 6 bis 8, **dadurch gekennzeichnet, dass**
Dienstabnehmer (UAC, 100) und Dienstanbieter (UAS, 201a, 201b) unter Verwendung der Regelungen gemäß des OPC-UA Protokolls miteinander kommunizieren.

10. Vorrichtung zur Erstellung eines Zertifikates für die sichere Bereitstellung von Diensten mittels einer Ablaufsteuerungsumgebung, gemäß einem der vorherigen Patentansprüche 6 bis 8, **dadurch gekennzeichnet, dass**
Dienstabnehmer (UAC, 100) und Dienstanbieter (UAS, 201a, 201b) unter Verwendung der Regelungen gemäß des HTTPS Protokolls miteinander kommunizieren.
